# DEMANDE DE BREVET EUROPEEN

(11) **EP 1 826 419 A2**
(43) Date de publication de la demande: **29.08.2007**
(21) Numéro de dépôt: 07356019.5
(22) Date de dépôt: 15.02.2007
(51) Int. Cl.: F15B 19/00

(54) **Procédé de contrôle d'étanchéité entre un tuyau de transport de fluide hydraulique et un piquage de réception appartenant à un dispositif hydraulique**

(30) Priorité: 22.02.2006 FR 0601550
(71) Demandeur: Jtekt Europe, 69540 Irigny (FR)
(72) Inventeur: Carcel, Evelyne, 38200 Serpaize (FR); Blanc Jolicoeur, Gérard, 69005 Lyon (FR)
(74) Mandataire: Bratel, Gérard

(57) **Abrégé**

Le procédé vise à vérifier la présence d'un joint torique d'étanchéité (10) entre une paroi externe tubulaire du tuyau (6) et une paroi interne tubulaire du piquage de réception (9). La paroi interne comporte un épaulement annulaire (9b) formant surface de butée pour une partie sensiblement annulaire d'appui (6b) à l'extrémité du tuyau (6). Au moins une encoche est prévue dans la partie d'appui (6b) à l'extrémité du tuyau (6) de sorte que le contact de cette dernière en butée contre l'épaulement (9b) du piquage de réception (9) ne soit pas étanche. Le contrôle d'étanchéité consiste à alimenter le circuit hydraulique en air sous pression de façon à assurer une montée en pression (P) dans le circuit, puis à couper l'alimentation en air sous pression, et à mesurer une éventuelle chute de pression dans le circuit en vue de détecter une fuite d'air entre la paroi externe du tuyau (6) et la paroi interne du piquage de réception (9). Ce procédé est applicable à une ligne de montage de direction assistée hydraulique.

## Description

La présente invention concerne un procédé de contrôle d'étanchéité entre un tuyau de transport de fluide hydraulique et un piquage de réception appartenant à un dispositif hydraulique, auquel le tuyau est raccordé, en vue de vérifier la présence d'un joint torique d'étanchéité entre une paroi externe cylindrique du tuyau et une paroi interne cylindrique du piquage de réception.

Dans les systèmes de direction assistée hydraulique pour véhicule automobile, le fluide hydraulique est transporté entre la valve d'assistance et le vérin d'assistance par des tuyaux dont les extrémités sont reçues par exemple dans un piquage d'alimentation ménagé dans un carter ou dans un connecteur d'un tube de vérin d'assistance. L'étanchéité entre la paroi externe du tuyau, dans la région de son extrémité, et la paroi interne du piquage est assurée par un joint torique.

La paroi interne du piquage comporte un épaulement annulaire formant surface de butée pour une partie annulaire d'appui prévue à l'extrémité du tuyau. La face frontale du tuyau peut constituer cette partie d'appui, ou bien cette dernière peut être réalisée sous la forme d'un bourrelet annulaire saillant radialement sur la paroi externe du tuyau.

La partie d'appui du tuyau venant en butée contre l'épaulement annulaire du piquage assure un contact métallique précaire mais suffisamment étanche pour masquer une éventuelle absence du joint torique d'étanchéité lors d'un contrôle d'étanchéité à l'air de la direction assemblée. En effet, un contrôle visuel direct de la présence du joint ne serait pas possible ici.

Les opérations de contrôle d'étanchéité à l'air consistent en général à alimenter le circuit hydraulique en air sous pression de façon à assurer une montée en pression dans le circuit, puis à couper l'alimentation en air sous pression, et à mesurer une éventuelle chute de pression dans le circuit en vue de détecter une éventuelle fuite d'air entre la paroi externe du tuyau et la paroi interne du piquage de réception.

L'absence du joint d'étanchéité, non détectable visuellement, n'est constatée que plus tard, lorsque la direction a quitté la ligne de montage et qu'est rompu, par exemple du fait de vibrations, le contact entre la partie d'appui du tuyau et l'épaulement de butée du piquage. On comprend aisément que ce phénomène est économiquement très dommageable du fait du coût du retour en fabrication de la direction ou de son échange, du nombre de plaintes, de la perte de clientèle, etc.

Par ailleurs, les moyens et procédures de contrôle d'étanchéité ne doivent pas conduire à une dégradation de cette étanchéité elle-même, notamment dans le cas de systèmes fonctionnant sous une pression hydraulique élevée, ce qui est le cas des systèmes de direction assistée hydraulique, dans lesquels la pression d'utilisation peut être supérieure à 150 bars.

La présente invention vise à éviter les inconvénients précédemment exposés, en proposant un procédé de contrôle d'étanchéité qui permette de vérifier avec certitude la présence d'un joint torique d'étanchéité entre une paroi externe cylindrique à l'extrémité d'un tuyau de transport de fluide hydraulique et une paroi interne cylindrique d'un piquage de réception appartenant à un dispositif hydraulique, ce procédé étant adapté pour des systèmes fonctionnant sous une pression hydraulique élevée, tels que notamment les systèmes de direction assistée hydraulique pour véhicule automobile.

A cet effet, l'invention a pour objet un procédé de contrôle d'étanchéité tel que présenté ci-dessus, et dans lequel au moins une encoche ou entaille est prévue dans la partie d'appui à l'extrémité du tuyau de sorte que le contact de cette dernière en butée contre l'épaulement annulaire du piquage de réception ne soit pas étanche.

Ainsi, l'idée inventive consiste à créer une discontinuité de contact entre la partie d'appui du tuyau et l'épaulement de butée du piquage de réception, de sorte que l'étanchéité entre la paroi externe du tuyau et la paroi interne du piquage de réception ne puisse être assurée que par le joint torique, l'absence d'une fuite d'air entre ces parois lors du contrôle indiquant avec certitude la présence et le bon positionnement du joint d'étanchéité. On notera que la forme préconisée par l'invention, à savoir la réalisation d'une ou plusieurs encoches ou entailles, possède l'avantage d'empêcher toute extrusion du joint torique, même soumis à une haute pression hydraulique.

Selon une possibilité avantageuse, la partie d'appui du tuyau étant réalisée sous la forme d'un bourrelet annulaire saillant radialement sur la paroi externe du tuyau, la ou les encoches ou entailles, sont ménagées de manière approximativement radiale dans la paroi d'appui du bourrelet contre l'épaulement du piquage de réception, et sont inclinées par rapport au plan de l'épaulement.

Selon une autre possibilité, dans le cas où la face frontale du tuyau forme la partie d'appui du tuyau, la ou les encoches ou entailles sont ménagées radialement ou diamétralement dans cette face frontale du tuyau.

Le procédé, objet de la présente invention, est notamment utilisable pour un contrôle lors du montage d'une direction assistée hydraulique pour véhicule automobile, dans laquelle le tuyau relie une valve d'assistance à un vérin d'assistance, et est reçu dans des piquages de réception ménagés dans la valve d'assistance et dans un carter ou un connecteur du vérin d'assistance.

De toute façon, l'invention sera bien comprise à l'aide de la description qui suit, en référence au dessin schématique annexé sur lequel:
- la figure 1 représente les liaisons, auxquelles le procédé selon l'invention est applicable, entre une valve d'assistance et un vérin d'assistance d'une direction assistée hydraulique pour véhicule automobile;
- la figure 2 est une vue en coupe selon ∥-∥ de la figure 1 qui représente un piquage d'alimentation du vérin d'assistance par un tuyau de liaison à la valve d'assistance;
- la figure 3 est une vue analogue à la figure 2, qui représente un autre type de piquage d'alimentation du vérin d'assistance par un tuyau de liaison à la valve d'assistance;
- la figure 4 illustre un premier mode de mise en oeuvre du procédé selon l'invention par une vue en coupe du tuyau de liaison en position dans le piquage;
- la figure 5 est une vue agrandie d'un détail de la figure 4, montrant l'extrémité du tuyau seule;
- la figure 6 illustre le premier mode de mise en oeuvre du procédé, par une vue en coupe d'une région de raccordement du carter de la valve d'assistance à deux tuyaux de liaison au vérin d'assistance;
- la figure 7 est une vue similaire à la figure 4 qui illustre un second mode de mise en oeuvre du procédé selon l'invention;
- la figure 8 est une vue de détail similaire à la figure 5 dans le cadre du second mode de mise en oeuvre du procédé;
- la figure 9 est une vue analogue à la figure 6 dans le cadre du second mode de mise en oeuvre du procédé.

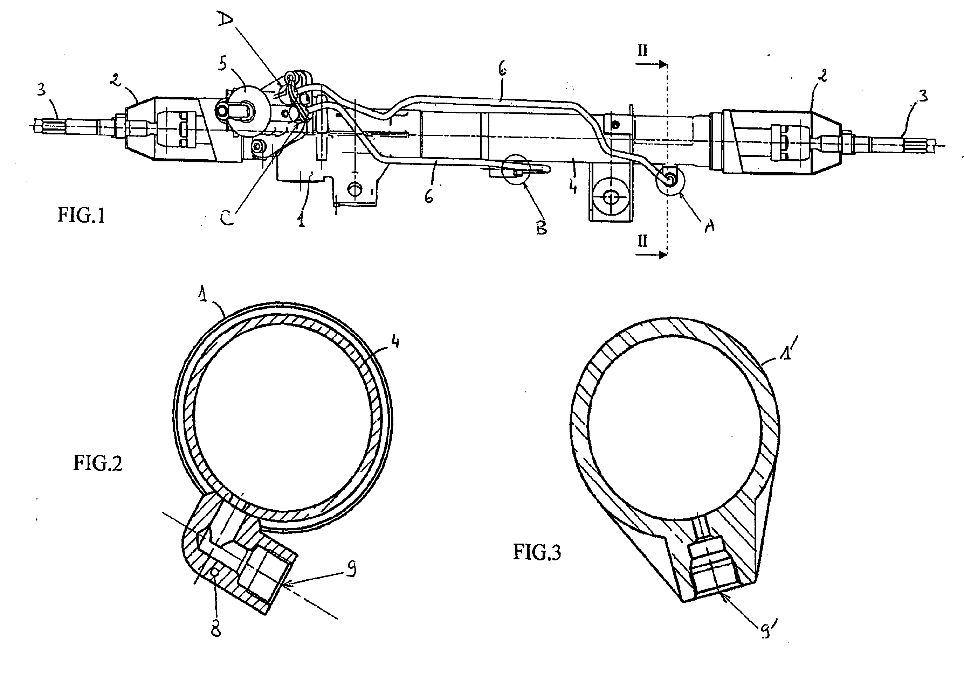

La figure 1 montre, extérieurement, une direction assistée hydraulique à crémaillère de véhicule automobile, qui comprend entre autres un carter central tubulaire 1 par exemple en aluminium, des soufflets 2 et des biellettes 3.

Le circuit hydraulique de la direction comprend un tube de vérin d'assistance 4 en acier, emmanché dans le carter 1, et comportant, de façon connue, deux chambres de vérin reliées respectivement par deux tuyaux 6 de transport de fluide hydraulique à une valve d'assistance 5 placée au raccordement de la colonne de direction (non représentée).

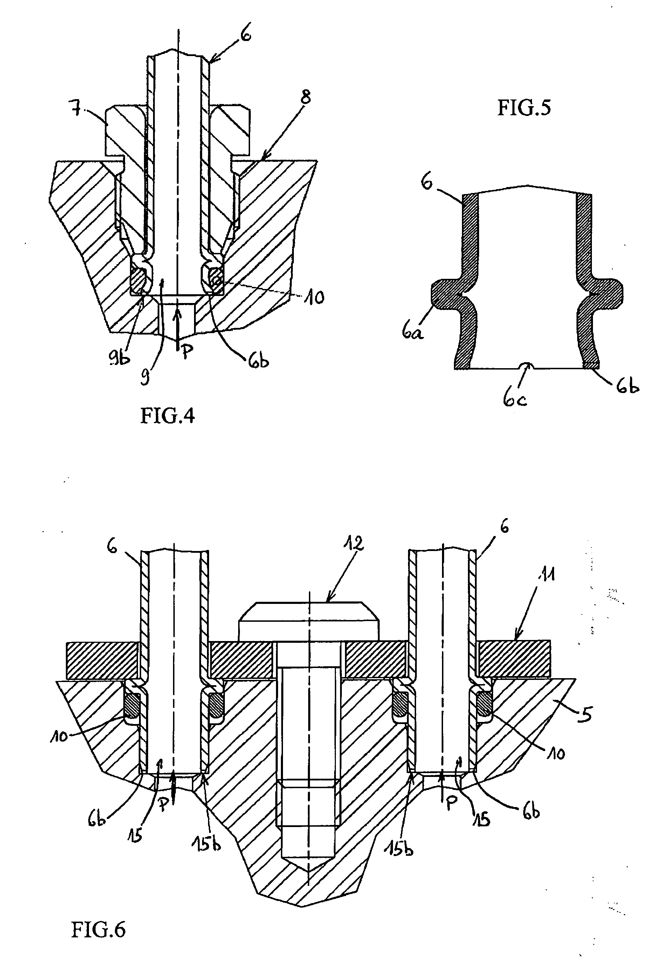

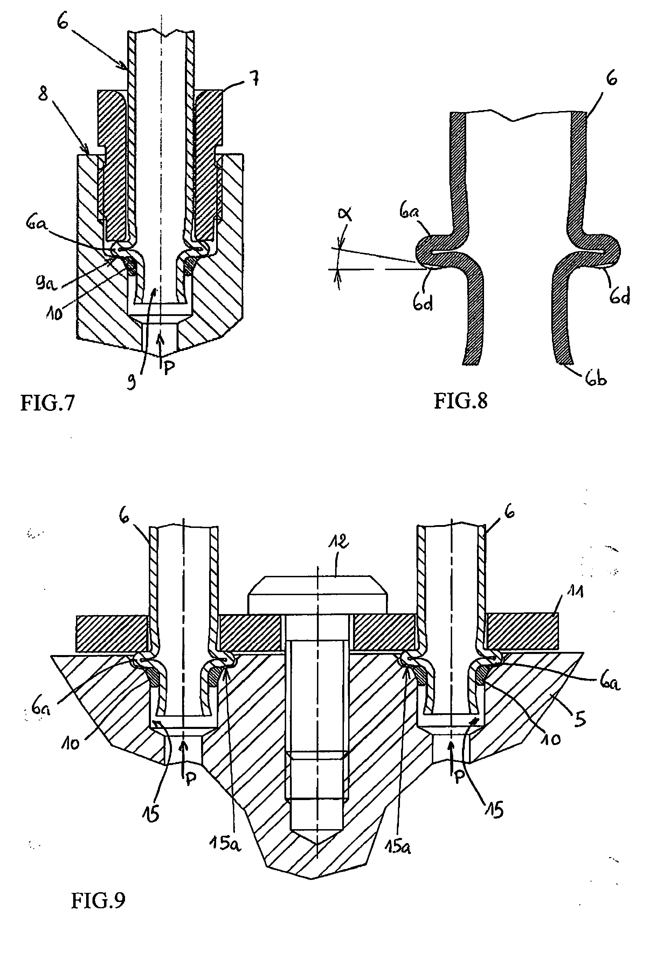

Les figures 6 et 9 représentent des régions C et D de raccordement des tuyaux 6 à la valve d'assistance 5, tandis que les autres figures s'intéressent plus particulièrement à deux régions A et B de raccordement des tuyaux 6 à l'une ou l'autre des chambres du vérin d'assistance.

Comme l'indique la figure 2, dans la région A, un bloc de connexion 8 coudé est soudé sur le tube de vérin 4. Le bloc 8 présente un piquage 9 d'alimentation du vérin prévu pour recevoir une extrémité de l'un des tuyaux 6. Bien entendu, le bloc de connexion 8 pourrait être droit et non coudé.

De même, comme illustré sur la figure 3, l'invention s'appliquerait également à un carter 1' notamment en aluminium qui intégrerait la fonction de vérin d'assistance, un piquage 9' d'alimentation du vérin étant alors ménagé directement dans le carter 1' pour recevoir une extrémité de l'un des tuyaux 6.

Sur la figure 4, l'extrémité du tuyau 6 est maintenue en position dans le piquage 9 par une vis de serrage 7 creuse qui s'appuie contre un bourrelet annulaire 6a saillant radialement sur la paroi externe du tuyau 6:

L'extrémité 6b du tuyau 6 vient en butée contre un épaulement annulaire 9b formant surface de butée au fond du piquage 9.

L'étanchéité entre la paroi externe du tuyau 6 et la paroi interne du piquage 9 est assurée par un joint torique 10 maintenu sous le bourrelet 6a.

L'extrémité 6b du tuyau 6 présente sur sa face frontale une encoche diamétrale 6c (voir figure 5) qui empêche de réaliser un contact étanche entre l'extrémité 6b du tuyau 6 et l'épaulement 9b du piquage 9.

Sur la ligne de fabrication de la direction assistée hydraulique, un contrôle d'étanchéité à l'air de la direction assemblée est réalisé par une montée en pression P dans le système hydraulique, puis par une coupure de l'alimentation en pression, et par une mesure d'une valeur de chute de pression éventuelle dans le système. L'encoche 6c crée un passage d'air à l'extrémité 6b du tuyau 6.

Si le joint torique 10 est présent et positionné normalement, il empêche toute fuite d'air entre les parois adjacentes du tuyau 6 et du piquage 9, dans la région du filetage de la vis de serrage 7. Dans ce cas, aucune chute de pression n'est détectée. Dans le cas contraire, la mesure d'une chute de pression indiquerait avec certitude que le joint 10 est mal positionné ou absent, car l'encoche 6c empêche de réaliser un contact métallique étanche entre l'extrémité 6b du tuyau 6 et l'épaulement 9b du piquage 9.

L'invention évite ainsi, de façon simple et peu onéreuse, qu'un tel contact étanche ne masque l'absence du joint d'étanchéité 10, et elle permet de corriger ce défaut instantanément (par ajout du joint 10 manquant) avant d'expédier la direction assemblée.

Comme le montre la figure 6, l'invention est également applicable au contrôle d'étanchéité dans les régions C et D (voir figure 1) de raccordement des tuyaux 6 sur la valve d'assistance 5.

Deux piquages 15 sont réalisés côte à côte dans le carter de la valve d'assistance 5 pour recevoir les régions d'extrémité des tuyaux 6. L'extrémité 6b de chaque tuyau 6 vient en butée contre un épaulement annulaire 15b formant surface de butée au fond du piquage correspondant.

Un bourrelet annulaire 6a, saillant radialement sur la paroi externe du tuyau 6, maintient un joint torique 10 d'étanchéité entre les parois du tuyau 6 et du piquage 15.

Les extrémités 6b des tuyaux 6 sont maintenues simultanément en position dans les piquages 15 par une plaque de fixation 11 fixée sur le carter de la valve 5 par une vis de fixation 12.

La plaque 11 comporte deux ouvertures cylindriques de diamètre inférieur au diamètre extérieur des bourrelets 6a des tuyaux 6, pour assurer un serrage, mais supérieur ou égal au diamètre des tuyaux 6, pour en permettre le passage. Ainsi, la plaque 11 appuie sur les bourrelets 6a pour maintenir les tuyaux 6 dans les piquages 15.

Comme précédemment, l'extrémité 6b des tuyaux 6 présente une encoche diamétrale 6c qui empêche de réaliser un contact étanche entre l'extrémité 6b du tuyau 6 et l'épaulement 15b du piquage 15. L'absence de fuite d'air entre la paroi externe du tuyau 6 et la paroi interne du piquage 15 ne peut donc résulter que de la présence du joint torique d'étanchéité 10.

Les figures 7 à 9 illustrent un second mode de mise en oeuvre du procédé objet de la présente invention.

Dans ce cas, comme le montre la figure 7, le tuyau 6 vient en butée, non plus par son extrémité, mais par son bourrelet 6a contre un épaulement annulaire 9a prévu dans le piquage 9 d'alimentation du vérin. C'est donc entre le bourrelet 6a et l'épaulement annulaire 9a qu'il convient d'éviter un contact étanche.

A cet effet, des encoches 6d radiales, inclinées d'un angle α de quelques degrés (voir figure 8) par rapport au plan de l'épaulement 9a, sont ménagées dans la paroi inférieure (sur le dessin) d'appui du bourrelet 6a contre l'épaulement 9a.

Comme précédemment, ce second mode d'exécution est également applicable au contrôle d'étanchéité dans les régions C et D (voir figure 1) de raccordement des tuyaux 6 sur la valve d'assistance 5.

Comme indiqué sur la figure 9, le bourrelet 6a de chaque tuyau 6 vient en butée contre un épaulement annulaire 15a formant surface de butée dans le piquage 15 correspondant du carter de la valve d'assistance 5.

On ne s'éloignerait pas du cadre de l'invention, telle que définie dans les revendications annexées, en modifiant la forme ou le nombre des encoches ou entailles des tuyaux.

## Revendications

1. Procédé de contrôle d'étanchéité entre un tuyau (6) de transport de fluide hydraulique et un piquage de réception (9; 9'; 15) appartenant à un dispositif hydraulique (4; 1'; 5), auquel le tuyau (6) est raccordé, en vue de vérifier la présence d'un joint torique d'étanchéité (10) entre une paroi externe cylindrique du tuyau (6) et une paroi interne cylindrique du piquage de réception (9; 9'; 15), ladite paroi interne comportant un épaulement annulaire (9b; 9a; 15b; 15a) formant surface de butée pour une partie sensiblement annulaire d'appui (6b; 6a) à l'extrémité du tuyau (6), ledit procédé comprenant les étapes consistant à alimenter le circuit hydraulique en air sous pression de façon à assurer une montée en pression (P) dans le circuit, puis à couper l'alimentation en air sous pression, et à mesurer une éventuelle chute de pression dans le circuit en vue de détecter une éventuelle fuite d'air entre la paroi externe du tuyau (6) et la paroi interne du piquage de réception (9; 9'; 15), **caractérisé en ce qu'**au moins une encoche (6c; 6d) ou entaille est prévue dans la partie d'appui (6b; 6a) à l'extrémité du tuyau (6) de sorte que le contact de cette dernière en butée contre l'épaulement (9b; 9a; 15b; 15a) du piquage de réception (9; 9'; 15) ne soit pas étanche.

2. Procédé de contrôle selon la revendication 1, **caractérisé en ce que**, la partie d'appui du tuyau (6) étant réalisée sous la forme d'un bourrelet annulaire (6a) saillant radialement sur la paroi externe du tuyau (6), la ou les encoches (6d) ou entailles sont ménagées de manière approximativement radiale dans la paroi d'appui du bourrelet (6a) contre l'épaulement (9a; 15a) du piquage de réception (9; 9'; 15), et sont inclinées par rapport au plan de l'épaulement (9a; 15a).

3. Procédé de contrôle selon la revendication 1, **caractérisé en ce que**, la face frontale (6b) du tuyau (6) formant la partie d'appui du tuyau (6), la ou les encoches (6c) ou entailles sont ménagées radialement ou diamétralement dans cette face frontale (6b) du tuyau (6).

4. Utilisation du procédé de contrôle selon l'une des revendications 1 à 3 lors du montage d'une direction assistée hydraulique pour véhicule automobile, dans laquelle le tuyau (6) relie une valve d'assistance (5) à un vérin d'assistance (4; 1'), et est reçu dans des piquages de réception (9; 9'; 15) ménagés dans la valve d'assistance (5) et dans un carter (1') ou un connecteur (8) du vérin d'assistance (4).
